# EUROPEAN PATENT APPLICATION

(11) **EP 4 424 490 A1**
(43) Date of publication of application: **04.09.2024**
(21) Application number: 23159170.2
(22) Date of filing: 28.02.2023
(51) Int. Cl.: B29C 48/154, B29C 48/21, B29C 48/285, B29C 48/34, B29C 48/79, B29C 70/06, B29C 70/50, B29C 70/54, B29C 48/00, B29C 48/27, B29C 48/07, B29B 7/00, B29B 7/38, B29B 7/82, B29B 7/90

(54) **METHOD AND DEVICE FOR PREPARING A CONTINUOUS-FIBER REINFORCED THERMOPLASTIC COMPOSITE MATERIAL**

(71) Applicant: Cloud59 BV, 6245 TH Eijsden (NL)
(72) Inventor: van Kessel, Theodorus Petrus Hendrikus, 6372 BS Landgraaf (NL); Lemmens, Joseph Maria Hubertus, 6372 BS Landgraaf (NL)
(74) Representative: IPecunia

(57) **Abstract**

Method of manufacturing a continuous-fiber reinforced thermoplastic composite comprising the steps of
a) providing and heating a recycled thermoplastic continuous-fiber tape comprising a first thermoplastic resin to obtain a heated recycled thermoplastic continuous-fiber tape;
b) threading the heated recycled thermoplastic continuous-fiber tape through a first die to obtain an intermediate continuous-fiber thermoplastic material;
c) feeding the intermediate continuous-fiber thermoplastic material through a chamber filled with a second molten thermoplastic resin, wherein the chamber is connected to an extruder;
d) applying in the chamber the second thermoplastic resin to the intermediate continuous-fiber thermoplastic material to obtain a coated intermediate continuous-fiber thermoplastic material and threading the coated continuous-fiber thermoplastic composite material through a second die to obtain a continuous-fiber reinforced thermoplastic composite;
e) cooling the continuous-fiber reinforced thermoplastic composite.

## Description

### FIELD OF THE INVENTION

The present invention relates to a method of manufacturing a continuous-fiber reinforced thermoplastic composite comprising a recycled thermoplastic continuous-fiber tape comprising a first thermoplastic resin and a second thermoplastic resin. The invention further relates to a fiber reinforced composite granulate comprising a recycled thermoplastic continuous-fiber tape, as well as a continuous-fiber reinforced thermoplastic composite comprising a core of recycled thermoplastic continuous-fiber tape comprising a first thermoplastic resin and a coating of a second thermoplastic resin, wherein the continuous-fiber reinforced thermoplastic composite comprises 30-60 wt% of the core and 40-60 wt% of the coating.

### STATE OF THE ART

Most recycling facilities and transfer stations do not accept fiber glass composites and other composites comprising fibers, because it is almost impossible to recycle. The equipment that can recycle fiber glass composites and other composites comprising fibers is very expensive and unavailable to most recycling facilities. One of the methods of recycling fiber glass is grinding and shredding, but this destroys most of the glass fibers, which destroys the strength, durability, size, and usefulness of the fiber glass for future applications. Furthermore, this process involves hard labour, is not cost effective and the glass fibers can only be used as a filler in cement, artificial wood, or asphalt.

Therefore, currently most glass fiber composites are not recycled but the composites are incinerated.

Composites containing fiber glass incineration, burning or "thermal oxidation," is using the composite to create heat for other purposes, such as making steam to power turbines that generate electricity or heating cement kilns. Later, much of the leftover fibers can be added to strengthen the concrete. An unfortunate by-product of fiber glass incineration for power is ash, which is usually sent straight to a landfill. About 25-30 wt% of the composite consists of thermoplastic material that can be burned and create energy. Typically about 70-75 wt% of the composite is however inorganic oxides which only contribute to ash content.

There are currently some recycling processes for recycled glass fiber reinforced plastics.

US 2018339499 AA discloses a method of manufacturing a reinforced composite article, comprising: receiving a recycled glass fiber and a recycled resin from waste streams; pulverizing the recycled glass fiber and the recycled resin; applying a chemical binder to the pulverized recycled glass fiber and drying the applied chemical binder; washing the pulverized recycled resin and drying the washed pulverized recycled resin; desiccant-drying the dried pulverized recycled resin; gravitational blending the recycled glass fiber and the recycled resin.

During the production of unidirectional fiber glass tape or film waste and cutting waste (herein referred to as recycled thermoplastic continuous-fiber tape) is generated. This waste and cutting waste have exposed fibers and fibers that are not covered, and is thereby a heterogeneous product with mechanical properties below those of the tape that it is cut off.

This cutting waste can be made suitable for a high-quality product due to its continuous-fiber, such as for example fiber glass sheets, fiber glass strings or reinforced glass fiber granulates.

The currently available recycling processes for glass fiber reinforced plastics do not maintain fiber length and are not cost effective. Little to no recycling processes allow for continues glass fibers to be maintained, which are high value materials.

Thus, there is a need for recycling processes that allow for reduction of waste during continuous-fiber composite tape or film production, maintenance of the continues fibers in the recycling process, that has a low CO₂ footprint, is environmentally friendly and/or cost effective.

### SUMMARY OF THE INVENTION

The above objects are achieved by the method of manufacturing a continuous-fiber reinforced thermoplastic composite comprising the steps of
a. providing and heating a recycled thermoplastic continuous-fiber tape comprising a first thermoplastic resin to obtain a heated recycled thermoplastic continuous-fiber tape;
b. threading the heated recycled thermoplastic continuous-fiber tape through a first die to obtain an intermediate continuous-fiber thermoplastic material;
c. feeding the intermediate continuous-fiber thermoplastic material through a chamber filled with a second molten thermoplastic resin, wherein the chamber is connected to for example an extruder;
d. applying in the chamber the second thermoplastic resin to the intermediate continuous-fiber thermoplastic material to obtain a coated intermediate continuous-fiber thermoplastic material and threading the coated continuous-fiber thermoplastic composite material through a second die to obtain a continuous-fiber reinforced thermoplastic composite;
e. cooling the continuous-fiber reinforced thermoplastic composite.

A further object is the provision of a continuous-fiber reinforced thermoplastic composite comprising a core of recycled thermoplastic continuous-fiber tape comprising a first thermoplastic resin and a coating of a second thermoplastic resin, wherein the continuous-fiber reinforced thermoplastic composite comprises 10-90 wt% of the core and 90-10 wt% of the coating.

Surprisingly, it has been found that the recycling method of the invention allow for reduction of waste during tape or film production and maintenance of the continues fibers in the recycling method. Further the invention has a low CO₂ footprint, is environmentally friendly and cost effective. Furthermore, the inventor found that the fibers are fully wetted, the exposed fibers are protected using the method of the invention. Lastly, the method of the invention produces a continuous-fiber reinforced thermoplastic composite and/or a fiber-reinforced composite granulate with a tensile strength, e-modulus and/or elongation at break comparable or superior to those of virgin materials comprising continuous or long fibers.

### DETAILED DESCRIPTION OF THE INVENTION

The present invention provides a method of manufacturing a continuous-fiber reinforced thermoplastic composite comprising the steps of a) providing and heating a recycled thermoplastic continuous-fiber tape comprising a first thermoplastic resin to obtain a heated recycled thermoplastic continuous-fiber tape; b) threading the heated recycled thermoplastic continuous-fiber tape through a first die to obtain an intermediate continuous-fiber thermoplastic material; c) feeding the intermediate continuous-fiber thermoplastic material through a chamber filled with a second molten thermoplastic resin, wherein the chamber is connected to for example an extruder; d) applying in the chamber the second thermoplastic resin to the intermediate continuous-fiber thermoplastic material to obtain a coated intermediate continuous-fiber thermoplastic material and threading the coated continuous-fiber thermoplastic composite material through a second die to obtain a continuous-fiber reinforced thermoplastic composite; e) cooling the continuous-fiber reinforced thermoplastic composite.

The present invention further provides a continuous-fiber reinforced thermoplastic composite comprising a core of recycled thermoplastic continuous-fiber tape comprising a first thermoplastic resin and a coating of a second thermoplastic resin, wherein the continuous-fiber reinforced thermoplastic composite comprises 10-90 wt% of the core and 10-90 wt% of the coating. In a preferred embodiment at least 90 wt% of the continuous-fiber reinforced thermoplastic composite consists of the core of recycled thermoplastic continuous-fiber tape comprising a first thermoplastic resin, and a coating of the second thermoplastic resin.

### Method

The method of manufacturing a continuous-fiber reinforced thermoplastic composite comprises the steps of:
a) providing and heating a recycled thermoplastic continuous-fiber tape comprising a first thermoplastic resin to obtain a heated recycled thermoplastic continuous-fiber tape;
b) threading the heated recycled thermoplastic continuous-fiber tape through a first die to obtain an intermediate continuous-fiber thermoplastic material;
c) feeding the intermediate continuous-fiber thermoplastic material through a chamber filled with a second molten thermoplastic resin, wherein the chamber is connected to an extruder;
d) applying in the chamber the second thermoplastic resin to the intermediate continuous-fiber thermoplastic material to obtain a coated intermediate continuous-fiber thermoplastic material and threading the coated continuous-fiber thermoplastic composite material through a second die to obtain a continuous-fiber reinforced thermoplastic composite;
e) cooling the continuous-fiber reinforced thermoplastic composite.

The process may contain a step f) cutting the continuous-fiber reinforced thermoplastic composite to obtain a fiber-reinforced composite granulate or sheet.

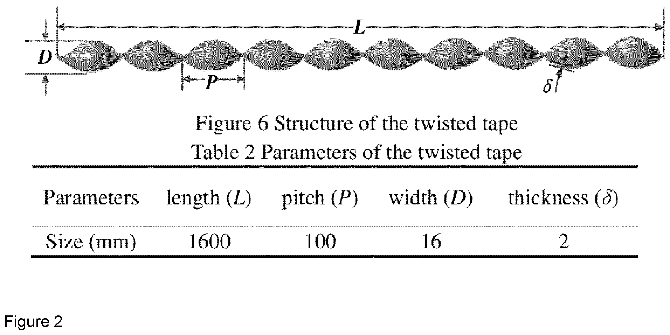

The recycled thermoplastic continuous-fiber tape comprises a longitudinal axis (see figure 2). Typically the recycled thermoplastic continuous-fiber tape may have a thickness of 100-500 µm (0.1-0.5 mm), preferably 200-400 µm (0.2-0.4 mm).

The recycled thermoplastic continuous-fiber tape may have a width between 1 and 200mm , preferably between 10 and 25mm.

In a preferred embodiment of the invention step a) involves twisting of the recycled thermoplastic continuous-fiber tape while feeding to the heater, wherein 0.2-10 twists along the longitudinal axis of the recycled thermoplastic continuous-fiber tape per meter length are provided, preferably 0.5-4 twists per meter, more preferably 1-3 twists per meter of tape. The pitch of the tape preferably ranges between 0.25 m and 2 m (250-2000 mm), more preferably between 0.33 and 1 meter (330-1000 mm).

Providing twists along the longitudinal axis of the tape has the advantage that loose glass fibers from the edges of the a recycled thermoplastic continuous-fiber tape are fed to the heater in a better way, improving the continuous feeding of the tape to the heater.

### Recycled thermoplastic continuous-fiber tape

During the production of unidirectional fiber tape or film, waste and cutting waste is generated. Examples of unidirectional fiber tape are produced by Celanese, which in many cases comprises glass fibers or carbon fibers in a matrix such as PP, HDPE, PA, PET, POM. Such waste and cutting waste may be used as the recycled thermoplastic continuous-fiber tape.

Recycled material, such as recycled thermoplastic continuous-fiber tape, may comprise thermoplastic continuous-fiber tape waste, thermoplastic continuous-fiber tape cutting waste and thermoplastic continuous-fiber tape reuse after first use. Preferably the recycled thermoplastic continuous-fiber tape is thermoplastic continuous-fiber tape waste and thermoplastic continuous-fiber tape cutting waste, most preferably thermoplastic continuous-fiber tape cutting waste.

The recycled thermoplastic continuous-fiber tape may be characterised in that the fibers at the edge of the tape are not fully covered by the first thermoplastic resin and/or the fibers at the edge are exposed and sticking out.

The recycled thermoplastic continuous-fiber tape comprises a first thermoplastic resin. The recycled thermoplastic continuous-fiber tape may comprise 5-95 wt% of fiber. For example when fibers are very light (like for example carbon fiber), the recycled thermoplastic continuous-fiber tape may comprise between 5-50 wt% of carbon fiber. For example when fibers have a high density (like glass fiber) the recycled thermoplastic continuous-fiber tape may comprise, for example 50-90 wt% of fiber, more preferably 60-80 wt% of fiber.

In an embodiment, the recycled thermoplastic continuous-fiber tape may comprise 25-95 wt% of glass fiber, preferably 50-90 wt% of glass fiber, more preferably 60-80 wt% of glass fiber.

The recycled thermoplastic continuous-fiber tape may comprise 5-70 vol % of fiber, preferably 20-65 vol % of fiber, more preferably 30-60 vol% or 45-55 vol % of fiber.

In a more preferred embodiment according to the invention the recycled thermoplastic continuous-fiber tape may be glass fiber in a PP matrix.

In a preferred embodiment according to the invention the recycled thermoplastic continuous-fiber tape may be a waste product obtain from cutting off the edges of a large tape roll.

The recycled thermoplastic continuous-fiber tape may be a cut off of a unidirectional Tape (Polypropylene Matrix with Infinite Fiber glass) on a roll.

### Fibers

The fiber as used in the invention is a preferably a continuous-fiber. A short fiber length is defined in the art as ≤0.1 mm in length. A long fiber length is defined in the art as >1 mm in length. A continuous-fiber is defined in the art as being longer than 1000 mm, preferably longer than 10.000 mm.

The longer the fibers the greater the e-modulus and tensile strength among other mechanical properties that improve upon length of the fiber.

The fiber according to the invention may be a round fiber, however any fiber shape can be recycled.

The fiber according to the invention may be made from a material which does not melt under the process conditions. In a preferred embodiment the fiber does not melt under the processing conditions of the method according to the invention.

The fiber according to the invention may be selected from the group of glass, carbon, nylon, PET, metal, steel, natural fibers and basalt.

In a preferred embodiment according to the invention the fiber may be selected from the group of glass, carbon, nylon, metal, steel and basalt.

In a more preferred embodiment according to the invention the fiber may be selected from the group of glass fiber and carbon fiber.

In a most preferred embodiment according to the invention the fiber is a glass fiber. The fiber according to the invention may have a thickness of 230 micron (mm). Specifically the thickness for glass fibre preferably ranges between 5 and 30 micron (mm), while the thickness for carbon fibre preferably ranges between 5 and 10 micron (mm).

The fiber according to the invention preferably is unidirectional.

### Resins

The first thermoplastic resin according to the invention may be selected from the group of polypropylene (PP), polyamide, low-density polyethene (LDPE), High density polyethene (HDPE), polyethylene terephthalate (PET), POM and polybutylene terephthalate (PBT).

The second thermoplastic resin according to the invention may be selected from the group of polypropylene (PP), polyamide, low-density polyethene (LDPE), HDPE, polyethylene terephthalate (PET), POM and polybutylene terephthalate (PBT).

In an embodiment according to the invention the first thermoplastic resin and the second thermoplastic resin may be each independently selected.

In a preferred embodiment according to the invention the first thermoplastic resin and the second thermoplastic resin may be of the same type or class of thermoplastic resin. For example when the first thermoplastic resin is a PP, preferably the second thermoplastic material is also a PP.

### Heater

The method according to the invention provides in step a) a recycled thermoplastic continuous-fiber tape, which is heated.

The heating of the recycled thermoplastic continuous-fiber tape may occur in any way, like for example using heating plates, hot air or IR light.

The heating of the recycled thermoplastic continuous-fiber tape may occur to a temperature so that the thermoplastic material starts to softening or melt. Preferably the recycled thermoplastic continuous-fiber tape is heated to a temperature between 0 and 70 celc above the melting temperature of the thermoplastic resin of the recycled thermoplastic continuous-fiber tape. For example, when the thermoplastic of a recycled thermoplastic continuous-fiber tape is polypropylene, the heating temperature ranges between 150 and 220 celc, preferably between 170 and 210 celc, most preferably between 180 and 200 celc.

Through heating the recycled thermoplastic continuous-fiber tape before threading said recycled thermoplastic continuous-fiber tape through the first die the quality of the tape can be maintained or even improved. The heating of the recycled thermoplastic continuous-fiber tape can reduce damage to the fibers and/or fibers exposed at the edge. Reducing damage and/or repair exposed fibers is expected to improve mechanical properties of the final product.

In a preferred embodiment, threading the heated recycled thermoplastic continuous-fiber tape to the first die is performed while twisting the recycled thermoplastic continuous-fiber tape. Through heating the recycled thermoplastic continuous-fiber tape before threading said recycled thermoplastic continuous-fiber tape through the first die using a twisting motion the quality of the tape can be maintained or even improved. The heating and using a twisting motion the recycled thermoplastic continuous-fiber tape can reduce damage to the fibers and/or fibers exposed at the edge. The twisting motion can support covering the exposed fibers.

### Die and Threading

Threading through the first or the second die is regarded to mean to cause something to pass through the first or second die.

The threading of the continues fiber through the dies occurs in the longitudinal direction.

The die aperture of the first die according to the invention may have any shape. Preferably the shape is circular, rectangular or square shape, preferably circular or rectangular, most preferably circular.

The die aperture of the second die according to the invention may have any shape. Preferably the shape is circular, rectangular or square shape, preferably circular or rectangular, most preferably circular.

In an embodiment according to the invention the shape of the first die and the second die may be each independently selected.

In a preferred embodiment according to the invention the shape of the first die and the second die may be of the same.

The die aperture of the first die may have a surface area of 0.78-78.53 mm², preferably 4.90-19.63 mm², according to the invention.

The die aperture of the first die may have a circular shape with a diameter of 1-10 mm, preferably 2.5-5 mm, according to the invention.

The method according to the invention wherein said threading through the first die of the heated recycled thermoplastic continuous-fiber tape may occur through a twisting motion.

In a preferred embodiment of the method according to the invention said threading through the first die of the heated recycled thermoplastic continuous-fiber tape may occur through a twisting motion, wherein said first die may have a circular shape.

The die aperture of the second die may have a surface area of 3.14-490.87 mm², preferably 1.76-7 mm², according to the invention.

The die aperture of the second die may have a circular shape with a diameter of 2-25 mm, preferably 3-6 mm, according to the invention.

According with the invention the die aperture of the second die may be larger than the die aperture of the first die.

The die aperture of the second die may preferably be at least 25% larger than that of the first die aperture, more preferably at least 33% larger than that of the first die aperture, most preferably at least 50% larger than that of the first die aperture. Preferably the die aperture of the second die is 10-50% larger than the die aperture of the first die.

### Cooling

The method according to the invention in step e) cools the continuous-fiber reinforced thermoplastic composite.

The cooling of the continuous-fiber reinforced thermoplastic composite may occur using a cooling water bath.

The cooling of the continuous-fiber reinforced thermoplastic composite may occur to a temperature between the 80°C and 200°C depending on the polymer used

### Extruder and Chamber

The method according to the invention may have extrusion conditions in step d) of 120-300 °C, depending on the melting and processing temperature of the second thermoplastic resin.

For example for polypropylene, the extrusion temperature may be between 200-240 celc, for ABS between 220 and 250 celc, for PET between 240 and 270 celc.

### Composite

The continuous-fiber reinforced thermoplastic composite according to the invention may comprise 10-80 wt% of fiber, preferably 20-75 wt% of fiber, more preferably 30-70 wt% of fiber.

The continuous-fiber reinforced thermoplastic composite according to the invention comprises a core of recycled thermoplastic continuous-fiber tape comprising a first thermoplastic resin and a coating of a second thermoplastic resin, wherein the continuous-fiber reinforced thermoplastic composite comprises 30-60 wt% of the core and 40-60 wt% of the coating.

The continuous-fiber reinforced thermoplastic composite according to the invention may be rolled after step e) onto a roll to be used further.

The continuous-fiber reinforced thermoplastic composite according to the invention may have an e-modulus of 7000-10000 N/mm2 measured according to ISO 527 and/or ASTM D635

The continuous-fiber reinforced thermoplastic composite according to the invention may have a tensile strength of 100-250 N/mm2, measured according to ISO 527 and/or ASTM D635.

The continuous-fiber reinforced thermoplastic composite according to the invention may have an elongation at break of 2.5-3%, measured according to ISO 527 and/or ASTM D635

### Granulate

The continuous-fiber reinforced thermoplastic composite according to the invention may be cut to obtain a fiber-reinforced composite granulate.

The fiber-reinforced composite granulate may comprise unidirectional fibers with a length of 1-100 mm, preferably 2-75 mm, more preferably 3-50 mm, most preferably 4-25 mm.

### Mechanical Property Testing

The tensile strength was measured in accordance with ISO 527.

Impact resistance (Charpy) was measured in accordance with ISO 179 and/or ASTM D6110.

Izod impact resistance was measured in accordance with ISO 180 and/or ASTM D256

### DESCRIPTION OF FIGURES

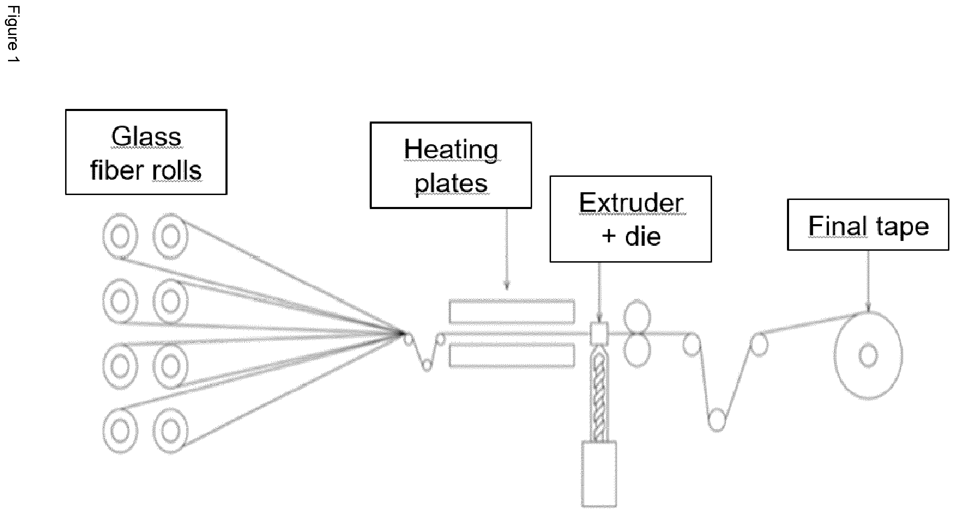

Figure 1 illustrates a manufacturing set up in accordance with the invention.
Figure 2 illustrates a tape having a longitudinal axis and a twist along the longituidinal axis.

### EXAMPLES

### Experiment 1 - Method of manufacturing a continuous-fiber reinforced thermoplastic composite

The cuttings of the sides of a unidirectional glass fiber tape with a PP coating role was collected and rolled up. This cutting waste product was between the 1 cm and 4 cm wide and between the 250 and 320 micron thick. The glass fibers of this waste product were continuous, unidirectional, the glass fibers on the edges were not fully coated with the PP and glass fibers being exposed.

This rolled up waste product (recycled thermoplastic continuous glass fiber tape comprising a first thermoplastic resin, 30 wt% PP resin with 70 wt% glass fiber) was fed through two heating elements obtaining a heated recycled thermoplastic continuous glass fiber tape.

The heated recycled thermoplastic continuous glass fiber tape was thread through a first circular die with a diameter of 2,8 mm in a twisting motion obtaining an intermediate continuous-fiber thermoplastic material.

The intermediate continuous-fiber thermoplastic material was fed through a chamber filled with polypropylene. The chamber was connected to an extruder, which was running at 210 °C and 25 bar pressure. Within the chamber a polypropylene was applied onto the intermediate continuous-fiber thermoplastic material to obtain a coated intermediate continuous-fiber thermoplastic material.

The coated intermediate continuous-fiber thermoplastic material was thread through a second circular die with a diameter of 3mm obtaining a continuous glass fiber reinforced thermoplastic composite.

The continuous glass fiber reinforced thermoplastic composite was cooled in a water bath at 20°C.

The continuous glass fiber reinforced thermoplastic composite was rolled up.

### Experiment 2 - Method for Granulate

The rolled up continuous glass fiber reinforced thermoplastic composite was cut to obtain a glass fiber-reinforced composite granulate with 12 mm long fiber glass.

### Experiment 3 - Granulate according to the invention and Comparison with Commercial Products

The fiber-reinforced composite granulates comprising the recycled thermoplastic continuous-fiber tape were compared to commercially available virgin fiber-reinforced composite granulate.

The difference between the fiber-reinforced composite granulate according to the invention and the virgin fiber-reinforced composite granulate is that the fiber-reinforced composite granulate according to the invention has a glass fiber with a length of 12 mm, whereas the virgin fiber-reinforced composite granulate has a glass fiber length of 15 mm.

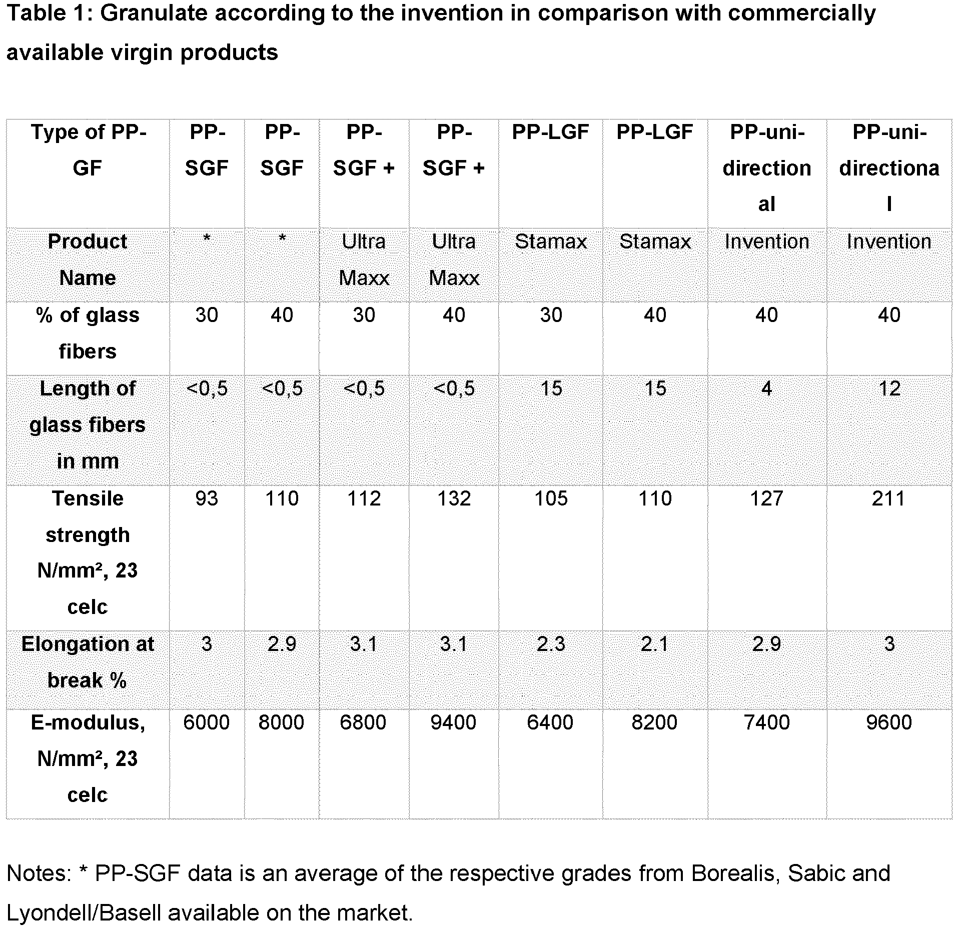

The results of table 1 show that the granulate of the invention at comparable fiber glass percentage to virgin material has superior tensile strength and e-modulus, while comprising significantly shorter glass fibers. The elongation at break is about the same value compared to the comparative data.

## Claims

1. A method of manufacturing a continuous-fiber reinforced thermoplastic composite comprising the steps of
a) providing and heating a recycled thermoplastic continuous-fiber tape comprising a first thermoplastic resin to obtain a heated recycled thermoplastic continuous-fiber tape;
b) threading the heated recycled thermoplastic continuous-fiber tape through a first die to obtain an intermediate continuous-fiber thermoplastic material;
c) feeding the intermediate continuous-fiber thermoplastic material through a chamber filled with a second molten thermoplastic resin, wherein the chamber is connected to an extruder;
d) applying in the chamber the second thermoplastic resin to the intermediate continuous-fiber thermoplastic material to obtain a coated intermediate continuous-fiber thermoplastic material and threading the coated continuous-fiber thermoplastic composite material through a second die to obtain a continuous-fiber reinforced thermoplastic composite;
e) cooling the continuous-fiber reinforced thermoplastic composite.

2. The method according to claim 1, wherein the recycled thermoplastic continuous-fiber tape is thermoplastic continuous-fiber tape cutting waste.

3. The method according to any one of claims 1-2, wherein the fiber is made from a material which does not melt under the process conditions.

4. The method according to claim 3, wherein the fiber is made from a material that is selected from the group of glass, carbon, nylon, PET, metal, steel, natural fibers and basalt; preferably glass, carbon, nylon, metal, steel and basalt; more preferably glass and carbon; most preferably glass.

5. The method according to any one of claims 1-4, wherein the recycled thermoplastic continuous-fiber tape comprises between 5-50 wt% of carbon fiber or between 50-90 wt% of glass fiber.

6. The method according to any one of claims 1-4, wherein the recycled thermoplastic continuous-fiber tape comprises between 5-70 vol % of fiber, preferably 20-65 vol % of fiber, more preferably 30-60 vol% or 45-55 vol % of fiber.

7. The method according to any one of claims 1 to 6, wherein the first thermoplastic resin and the second thermoplastic resin are each independently selected from the group of polypropylene (PP), polyamide, low-density polyethene (LDPE), polyethylene terephthalate (PET) and polybutylene terephthalate (PBT).

8. The method according to any one of claims 1-7, wherein the recycled thermoplastic continuous-fiber tape has a thickness of 100-500 µm, preferably 200-400 µm, and wherein the recycled thermoplastic continuous-fiber tape has a width between 1 and 200 mm, preferably between 10 and 25 mm.

9. The method according to any one of claims 1-8, wherein the recycled thermoplastic continuous-fiber tape comprises fiber glass in a PP matrix.

10. The method according to any one of claims 1-9, wherein the first thermoplastic resin is a PP, and the second thermoplastic material is a PP.

11. The method according to any one of claims 1-10, wherein the recycled thermoplastic continuous-fiber tape is heated in step a) to a temperature between 0 and 70 celc above the melting temperature of the thermoplastic resin of the recycled thermoplastic continuous-fiber tape.

12. The method according to any one of claims 1-11, wherein step a) involves twisting of the recycled thermoplastic continuous-fiber tape while feeding to the heater, wherein 0.2-10 twists along the longitudinal axis of the recycled thermoplastic continuous-fiber tape per meter length are provided, preferably 0.5-4 twists per meter, more preferably 1-3 twists per meter of tape.

13. A continuous-fiber reinforced thermoplastic composite comprising a core of recycled thermoplastic continuous-fiber tape comprising a first thermoplastic resin and a fiber, and a coating of a second thermoplastic resin, wherein the continuous-fiber reinforced thermoplastic composite comprises 10-90 wt% of the core and 10-90 wt% of the coating

14. The composite according to claim 13, wherein at least 90 wt% of the composite consists of the core of recycled thermoplastic continuous-fiber tape comprising a first thermoplastic resin, and a coating of the second thermoplastic resin.

15. The composite according to any one of claims 13-14, wherein the composite comprises between 10-80 wt% of fiber, preferably 20-75 wt% of fiber, more preferably 30-70 wt% of fiber.
